# EUROPEAN PATENT APPLICATION

(11) **EP 1 639 901 A1**
(43) Date of publication of application: **29.03.2006**
(21) Application number: 05255994.5
(22) Date of filing: 27.09.2005
(51) Int. Cl.: A23L 1/236, A23L 1/22

(54) **Low calorie, palatable sugar substitute with water insoluble bulking agent**

(30) Priority: 28.09.2004 US 613807 P; 22.06.2005 US 158472
(71) Applicant: McNeil Nutritionals, LLC, Ft. Washington PA 19034 (US)
(72) Inventor: Catani, Steven J., Athens, GA 30606 (US); Clarke, Steven D., North Brunswick, NJ 08902 (US); Liao, Shyhyuan, Windsor, NJ 08550 (US)
(74) Representative: Mercer, Christopher Paul

(57) **Abstract**

The invention relates to a low calorie, palatable table sugar substitute composition containing a water insoluble bulking agent and a high intensity sweetener, where the water insoluble bulking agent and high intensity sweetener are present in a proportion such that, on a volume:volume basis the table sugar substitute provides approximately the same sweetness as sucrose.

## Description

### CROSS-REFERENCE TO RELATED APPLICATIONS

This application claims the benefit of United States Provisional Application Number 60/613,807 filed on 28 September 2004, which is incorporated by reference herein in its entirety.

### BACKGROUND OF THE INVENTION

### Field of the Invention

This invention relates to a low calorie, palatable sugar substitute containing a water insoluble bulking agent, which is suitable for use as a substitute for table sugar and in the preparation of baked foods and other prepared solid and semi-solid comestibles and food stuffs.

### Description of the Prior Art

The preparation of cakes, cookies, ice cream, puddings, and other solid and semi-solid comestibles that have a significantly reduced calorie content and which retain the quality of conventional comestibles has been an elusive goal. Sugars such as sucrose, corn sweeteners, honey, etc., play several roles in comestibles, so when they are replaced with low calorie substitutes, more than just sweetness must be provided for by their replacement products. For instance, in addition to sweetness, sugar provides bulk, it reduces the water activity in baked goods by immobilizing water, it acts as a humectant to thereby affect the moisture of the finished product, and it affects the gelatinization temperature of starches during baking. In sum, sugar plays a significant role in the structure, volume, and tenderness of the finished product. In ice cream, sugar provides texture, viscosity, mouthfeel, and freezing point depression. In semi-solid comestibles, sugar contributes to the basic texture of the product.

High intensity sweeteners can provide the sweetness of sugar (although often with a slightly different taste), but because they are many times sweeter than sugar, only a small amount is needed to replace the sugar. Therefore, in solid and semi-solid food applications (e.g., table sugar substitutes, baked goods, fruit pie fillings, cereal bars, semi-solid comestibles such as ice cream, soft candies, gelatins, custards, puddings, sweet sauces, and the like), high intensity sweeteners are usually mixed with a bulking agent. The intent is for the bulking agent to fulfill as many of sugar's roles as possible. To date, however, no fully satisfactory bulking agent has been found.

Three classes of soluble bulking agents for use with high intensity sweeteners are in common use. The first class is characterized by having a caloric density near that of common nutritive sugars, and includes sucrose, glucose, fructose, or other cane, beet, fruit or grain derived sugar. Although such blends of sugar and high intensity sweeteners advantageously provide some bulk, they do so only with only a comparatively modest net caloric reduction.

The second class of soluble bulking agents has a reduced caloric content based on their ability to be absorbed into the bloodstream and their concomitant inability to be metabolized. As a result, these bulking agents are neither converted to energy nor stored as fat, and they must be removed from the body by alternative means. Examples of these bulking agents include the stereoisomers or normal nutritive sugars, such as I-glucose. Although these bulking agents behave similarly to their sugar mirror images and contain virtually zero calories, their use is not without disadvantages. For example, these bulking agents must be synthesized, and as a result their production is not economically attractive.

The last class of soluble bulking agents currently in use includes those compounds that mimic the solubility and bulk of sucrose, but are unable to be broken down by normal gastric enzymes and thus remain unabsorbed. Examples of these bulking agents include, for example, inulin and other fructooligosaccharides, polydextrose and other glucans, fructans, trehelose, some polymers of galactose and xylose, and various polyols such as the sugar alcohols.

As disclosed in United States Patent No. 6,423,358, because inulin is not hydrolyzed in the upper Gl track, its constituent sugars are therefore not absorbed. While some energy is provided when inulin is broken down by fermentation in the colon, the net energy available is only about 1.5 calories per gram range, which makes it highly suitable for low calorie foods. lnulin is also water soluble, like sucrose and the other commonly use bulking agents, and thus behaves advantageously in formulations. However, inulin tends to ferment in the colon, which results in gastric distress such as cramps and flatulence.

Another bulking agent within this class is sorbitol, which is one of the polyol type bulking agents. Sorbitol often causes gastric distress when used at high levels due to fermentation in the colon. Most polyols also typically provide a cooling sensation (negative heat of solution) that is not desirable in many food applications.

Another bulking agent within this class is polydextrose, which cannot be broken down in the upper Gl. Polydextrose is neither absorbed into the bloodstream nor fermentable in the colon, but tends to raise the osmotic pressure in the lower Gl track, which often results in diarrhea.

Another type of bulking agent in this class is the natural polymers such as psyllium, and other gums and hydrocolloids. These compounds are widely available and cause little Gl distress; however, although they are water soluble, they tend to possess poor sugar mimetic properties due to their ability to gel and bind water.

It would be desirable to have a low cost, low calorie, palatable sugar substitute composition suitable for use in solid and semi-solid food applications that would satisfactorily fulfill many of the roles of sugar without significantly compromising the sensory qualities imparted by sugar. It would further be desirable to have such a sugar substitute composition that would not cause the undesirable side effects typically associated with known soluble bulking agents such as laxation and gastric distress.

### SUMMARY OF THE INVENTION

The invention provides a solid, low calorie, palatable sugar substitute composition that comprises a water insoluble bulking agent plus a high intensity sweetener as described in the claims. The invention also provides baked goods and other solid and semi-solid comestibles prepared from the low calorie, palatable sugar substitute composition of the invention.

### DETAILED DESCRIPTION OF THE INVENTION

It is believed that one skilled in the art can, based upon the description herein, utilize the present invention to its fullest extent. The following specific embodiments are to be construed as merely illustrative, and not limitative of the remainder of the disclosure in any way whatsoever.

Unless defined otherwise, all technical and scientific terms used herein have the same meaning as commonly understood by one of ordinary skill in the art to which the invention belongs. Also, all publications, patent applications, patents, and other references mentioned herein are incorporated by reference. As used herein, all percentages are by weight unless otherwise specified.

As used herein, "water insoluble" shall include components or fractions of components that are soluble in 75 °F water to an extent of less than about 10 weight percent, e.g. less than about 5 weight percent or less than about 1 weight percent, after a period of one hour.

As used herein, "water soluble" shall include components or fractions of components that are soluble in 75 °F water to an extent of greater than or equal to about 10 weight percent or about 5 weight percent after a period of one hour.

The low calorie, palatable sugar substitute composition of the present invention comprises, consists of, and/or consists essentially of: a) a high intensity sweetener; and b) a water insoluble bulking agent.

Examples of suitable high intensity sweeteners include, but are not limited to sucralose, aspartame, saccharin, cyclamate, neotame, alitame, acesulfame potassium; sweet proteins such as brazien; extracts of sweet plants such as stevia; and their salts and derivatives thereof; and mixtures thereof.

In one embodiment, the high intensity sweetener that is employed in the invention is sucralose, which is the compound 4,1', 6'-trichloro-4,1', 6'-trideoxygalactosucrose. Sucralose is especially useful in recipes that require thermal processing (baking, retorting, extrusion, etc.), because of its heat stability and high quality sensory attributes

The water insoluble bulking agent is the component of the invention that acts as the principal bulking agent. Examples of suitable water insoluble bulking agents include celluloses such as those available from International Fiber Corporation under, the tradename, "Solka Floc®;" water insoluble fractions of starches, resistant starches, and modified versions thereof; diatomaceous earth; lignins of various plants such as, for example complex aromatic polymers formed from coumaryl, guaiacyl, coniferyl, and sinapyl alcohols; water insoluble hemicelluloses; water insoluble portions of amylose or amylose pectin; water insoluble fiber from plants such as, for example, nuts, oats, wheat, rice, barley, corn, bamboo; fibers from fruits such as apples; and water insoluble fiber from vegetables such as peas, dried beans, and beets, and derivatives and mixtures thereof.

In the preparation of prepared foods (baked goods, comestibles, etc.), sucralose (or other high intensity sweetener) is often used in the recipe in the amount to provide the equivalent amount of sweetness of the sugar it replaces. For example, because sucralose is about 600 times as sweet as sugar, it may be used in approximately 1/600 the amount of sugar replaced. The water insoluble bulking agent may then employed in an amount approximately sufficient to provide a desired function in the end product. In one embodiment, the water insoluble bulking agent may be equal to the bulk of the sugar that is replaced.

In preparing table sugar substitute (to be used in, for example, home baked goods, on cereals and fruits, and in other foods to replace sugar), the high intensity sweetener/water insoluble bulking agent composition can be produced by dry mixing, co-spray drying, co-freeze drying, agglomerization, blending, co-drying, extrusion, panning, serial blending, compaction, or by any other convenient process. The primary consideration is that the sweetness delivery needs to be uniform. For example, sucralose and water insoluble bulking agent can be blended in a weight ratio of about 4:1 to about 1:6000, e.g., from about 1:100 to about 1:600 or from about 1:300 to about 1:600, sucralose: water insoluble bulking agent.

In one embodiment, sucralose may be combined with other secondary, water soluble bulking agents such as maltodextrin, polyols (e.g. sorbitol), polydextrose, or oligosaccharide such as inulin, then co-dried or spray-dried on the water insoluble bulking agent to produce sugar substitute products with densities ranging from about 0.1 g/cc to about 0.8 g/cc. In this embodiment, the bulking agent portion may be comprised of, based upon the total weight of insoluble bulking agent and soluble bulking agent, from greater than about 10 percent, e.g., from greater than about 25 percent or greater than about 50 percent, of a water insoluble bulking agent. The water insoluble bulking agent /sucralose tabletop products will usually have densities ranging from about 0.1 g/mL to about 0.8 g/mL, i.e., e.g., from about 0.3 g/mL to about 0.6 g/mL or from about 0.3 g/mL to about 0.4 g/mL. Such tabletop water insoluble bulking agent /sucralose products have from about 1/2 to about 1/8 the amount of calories of the sugar they replace.

When the high intensity sweetener is not sucralose, the sugar substitute composiiton can be made by analogous procedures using similar considerations (such as the degree of sweetness of the high intensity sweetener compared with sucrose).

The water insoluble bulking agent /high intensity sweetener mixture may be used in the preparation of baked goods and other solid or semi-solid comestibles (i.e., excluding soft drinks, fruit drinks, and other liquids) in an amount such that the caloric content of the comestible is significantly less than the corresponding comestible made with sugar, i.e., e.g., from about 5% fewer calories up to a one-third or more reduction in calories.

We have unexpectedly found that the water insoluble bulking agents along with the high intensity sweetener yielded a superior sweetening composition for solid and semi-solid food products. This was especially surprising given the fact that the water insoluble bulking agents used in the present invention do not mimic the properties of sucrose, which is the standard for a full bulk sweetener, as do the other commonly used, soluble bulking agents. Advantageously, the use of the water insoluble bulking agent and high intensity sweetener combination did not yield the unpleasant effects associated with water soluble bulking agents such as increased laxation and gastric distress, thereby providing a more acceptable consumer experience.

The recipes shown below illustrate the use of the water insoluble bulking agent/sucralose composition of the invention in the preparation of baked goods and other comestibles. An important objective of the present invention is the direct replacement of sugar in some convenient weight or volume measure in such a manner as to require minimal or no modification of the commercial or home-use recipes. This is a key consideration from the standpoint of ease of use, and one in which other bulking agents have traditionally been less than successful.

Surprisingly, the sugar substitute composition of the present invention yielded satisfactory comestible baked goods and other solid/semi-solid products of good quality relative to sugar control despite the use of a water insoluble, as opposed to a water soluble bulking agent. More specifically, the versatility of the present invention can be demonstrated by the preparation of apple pies, peanut brittle, chocolate chips, chocolate coating, nougat, ginger snap cookies, yellow cake, cheese cake, and meringue, and the like using the present sugar substitute compositions as the sweetener.

The following examples further illustrate the invention (in which temperatures are given in °F.

### EXAMPLES

### EXAMPLE 1 - Comparative Use of Sweetener/Bulking Agent Combinations in Apple Lattice Pie

| | |
|---|---|
| Serves: | 8 |
| Preparation time: | 25 minutes plus 30 minutes chilling time (pastry) |
| Cooking time: | 1 hour |

| | |
|---|---|
| Ingredients: | |
| For the pastry: | |
| 250g | plain flour |
| 125g | polyunsaturated margarine |
| 2 tbsp | SPLENDA® No Calorie Sweetener product |

| | |
|---|---|
| For the filling: | |
| 6 medium | apples |
| ½ tsp | grated lemon rind |
| 1 tbsp | lemon juice |
| 20g | SPLENDA® No Calorie Sweetener product |
| 2 tbsp | plain flour |
| 2 tsp | cinnamon |
| 10g | low fat margarine |

### Serving Suggestion:

Serve with a small scoop of low fat ice-cream. (Not included in Nutrition Information.)

### Procedure

### Method:

### Pastry:

1 Sift the flour into a bowl and stir in SPLENDA® No Calorie Sweetener product. Rub in the margarine until the mixture resembles fine breadcrumbs.
2 Add enough cold water to form the mixture into a dough. Wrap in cling film and chill for 30 minutes
3 Remove from the fridge and on a lightly floured surface roll the pastry out thinly using a rolling pin. Line a 9" shallow, loose-bottomed flan tin with the pastry, reserving the trimmings for the lattice. Chill until ready to use.

### Filling:

1 Preheat oven to 230°C/220°C Fan/Gas Mark 7.
2 Peel, core and cut apples into ½ inch (1 cm) thick slices. Toss with the lemon rind and juice. Combine SPLENDA® No Calorie Sweetener product, flour and cinnamon. Stir into the apples.
3 Spoon into the chilled pie crust. Dot with margarine.
4 Cut remaining pastry into ¾ inch (2 cm) strips. Weave strips on top of pie in lattice fashion. Where the strips meet the edge of the pie, seal by brushing with water and pinching together, trimming any excess with a sharp knife.
5 Bake at 230°C/220°C Fan/Gas Mark 7 for 10 minutes. Reduce oven temperature to 180°C/170°C Fan/Gas Mark 4 and bake 35 to 40 minutes longer or until apples are tender.

The above procedure was repeated using the following sucralose/water insoluble bulking agent combinations in place of the 2 teaspoon of Splenda® No Calorie Sweetener product used in the control as follows:

**Table A - Comparative Water Insoluble Bulking Agent/Sweetener Combinations**

| ***Example*** | ***Amount (%) of sucralose***** | ***Amount (%) of starch**** |
|---|---|---|
| 1A | 75% | 25% |
| 1B | 50% | 50% |
| 1C | 25% | 75% |
| 1D | 4% | 96% |

All percentages set forth in the above table are expressed in weight percent, based upon a total weight amount of two teaspoons of SPLENDA® No Calorie Sweetener product.

SPLENDA® No Calorie Sweetener product, which is commercially available from McNEIL-PPC, Inc., contains a combination of sucralose with a maltodextrin, water soluble bulking agent.
* The starch is a resistant starch, which is commercially available from National Starch and Chemical Company under the tradename, "Novelose"
* The sucralose is commercially available from Tate & Lyle under the tradename, "SPLENDA® Sucralose."

### Comparative Test

Seven consumer test participants were asked to assess the appearance, liking, and sweetness of the 5 apple pies made with either the control sweetener or one of the 4 sweetener combinations set forth in Examples 1A to 1D above, using a 1-5 rating scale. A score of a "1" meant that the pie was poor in a particular attribute, while a score of a "5" meant that the pie was comparatively superb. The results are set forth below in Table B:

**Table B: Comparative Appearance, Liking, and Sweetness Results**

| *Example Number* | *Appearance* | *Liking* | *Sweetness* |
|---|---|---|---|
| Control | 4 | 4.5 | 3.5 |
| 1A | 4 | 1 | 5 |
| 1B | 4 | 1 | 5 |
| 1C | 4 | 1.5 | 4.5 |
| 1D | 4 | 4.5 | 3.5 |

The participants also noted that the low liking ratings for pies prepared in Examples 1B, 1C, and 1D were directly related to the higher sweetness ratings. This showed that the use of the combination of a water insoluble bulking agent with an amount of sucralose in excess of about 25 weight percent was too sweet for use in a baked goods. This Example also showed that for baked goods, the combination of insoluble bulking agent and sucralose performed as well as the control sweetener, which used water soluble bulking agents.

### EXAMPLE 2 - Comparative Use of Sweetener/Bulking Agent Combinations in Coffee Systems

A group of consumer test participants are asked to add with stirring 0.5 g of SPLENDA® No Calorie Sweetener product, which was used as a control, to a cup of hot coffee. They are similarly asked to add with stirring 0.5 g of each of the four experimental sweeteners of Example 1 independently to four, additional cups of hot coffee. Each participant is asked to rate their liking for the sweetened coffee, as well as the sweetness level of that coffee using a 1-5 scale, with a score of a "1" correlating to "not at all" and a score of "5" correlating to "extremely". They are also asked to make any additional comments about the food at the bottom of the ratings sheet.

This Example shows that the experimental sweetener, which contained about 96% of water insoluble bulking agent, performs as well as the control sweetener, which uses a water soluble bulking agent, and has a similar degree of sweetness. This Example also shows that as the content of water insoluble sweetener is increased to about 25% or more, the coffee becomes too sweet, and much of the water insoluble bulking agent precipitates to the bottom of the cup.

### EXAMPLE 3 - Comparative Use of Sweetener/Insoluble Bulkinq Agent /Soluble Bulking Agent Combinations in Apple Lattice Pie

An apple pie was made using SPLENDA® No Calorie Sweetener product in accordance with the procedure set forth in Example 1.

The above procedure was repeated using the following water soluble bulking agent/water insoluble bulking agent combinations in place of the 2 teaspoon of Splenda® No Calorie Sweetener product used in the control as follows:

**Table C - Comparative Water Insoluble Bulking Agent/Water soluble Bulking Agent Combinations**

| ***Example*** | ***Amount* (%) *of sucralose***** | ***Amount* (%) *of resistant starch**** | ***Secondary Water Soluble Bulking Agent at 40%*** |
|---|---|---|---|
| 3A (control) | 100% | 0% | --- |
| 3B | 0% | 60% | Inulin |
| 3C | 0% | 60% | Sucrose |
| 3D | 0% | 60% | Maltodextrin |

All percentages set forth in the above table are expressed in weight percent, based upon a total weight amount of two teaspoons of SPLENDA® No Calorie Sweetener product.

SPLENDA® No Calorie Sweetener product, which is commercially available from McNEIL-PPC, Inc., contains a combination of sucralose with a maltodextrin, water soluble bulking agent.
* The starch is a resistant starch, which is commercially available from National Starch and Chemical Company under the tradename, "Novelose"
* The sucralose is commercially available from Tate & Lyle under the tradename, "SPLENDA® Sucralose."

### Comparative Test

Consumer test participants were asked to assess the appearance, liking, and sweetness of the 4 apple pies made with either the control sweetener or one of the 3 sweetener combinations set forth in Examples 3B to 3D above, using a 1 - 5 rating scale. A score of a "1" meant that the pie was poor in a particular attribute, while a score of a "5" meant that the pie was comparatively superb. The results are set forth below in Table D:

**Table D: Comparative Appearance, Liking, and Sweetness Results**

| *Example Number* | *Appearance* | *Liking* | *Sweetness* |
|---|---|---|---|
| 3A/Control | 4 | 3 | 4 |
| 3B (inulin) | 3 | 1.6 | 2 |
| 3C (sucrose) | 4 | 1.6 | 3 |
| 3D (maltodextrin) | 4 | 2 | 3 |

This Example showed that the pies containing a combination of water insoluble bulking agent and water soluble bulking agent gave an overall acceptable appearance similar to that of the control. In addition, this Example showed that the sucrose and maltodextrin water soluble bulking agent combinations, respectively, also gave an overall acceptable sweetness similar to that of the control. In sum, this Example further showed that for baked goods, the combination of particularly the maltodextrin soluble bulking agent and the starch insoluble bulking agent performed comparable to the control sweetener, which used only water soluble bulking agents.

### EXAMPLE 4 - Comparative Use of Sweetener/Water Insoluble & Water Soluble Bulking Agent Combinations in Apple Lattice Pie

### Premixed Sweetener /Bulking Agent Combinations

A resistant starch available from National Starch & Chemical under the tradename, "Hi-Maize 1043," was dry blended with sucralose and an inulin water soluble bulking agent in a "Type T2-F, WAB TURBOLA" turbular mixer available from Willy A Bachoffen, AG for about five minutes at a speed of 72 rpm.

This procedure was repeated twice, but with the substitution of sucrose and maltodextrin, respectively, for the inulin. The total weight of each dry blended composition was 150 g, and the ratio of starch:sucralose:water soluble bulking agent in each of the blends was about 58.8 to about 1.2 to about 40.

### Ingredients for Pie:

| | |
|---|---|
| For the pastry: | |
| 125g | plain flour |
| 62.5g | polyunsaturated margarine |
| 1 tbsp | SPLENDA® No Calorie Sweetener granular product |

| | |
|---|---|
| For the filling: | |
| 3 medium | apples |
| ½ tsp | grated lemon rind |
| ½ tbsp | lemon juice |
| 10g | SPLENDA® No Calorie Sweetener granular product |
| 1 tbsp | plain flour |
| 1 tsp | cinnamon |
| 5g | polyunsaturated margarine |

### Procedure

### Method:

### Pastry:

1 Sift the flour into a bowl and stir in SPLENDA® No Calorie Sweetener product. Rub in the margarine until the mixture resembles fine breadcrumbs.
2 Add enough cold water to form the mixture into a dough. Wrap in cling film and chill for 30 minutes
3 Remove from the fridge and on a lightly floured surface roll the pastry out thinly using a rolling pin. Line a 9" shallow, loose-bottomed flan tin with the pastry, reserving the trimmings for the lattice. Chill until ready to use.

### Filling:

1 Preheat oven to 230°C/220°C Fan/Gas Mark 7.
2 Peel, core and cut apples into ½ inch (1 cm) thick slices. Toss with the lemon rind and juice. Combine SPLENDA® No Calorie Sweetener product, flour and cinnamon. Stir into the apples.
3 Spoon into the chilled pie crust. Dot with margarine.
4 Cut remaining pastry into ¾ inch (2 cm) strips. Weave strips on top of pie in lattice fashion. Where the strips meet the edge of the pie, seal by brushing with water and pinching together, trimming any excess with a sharp knife.
5 Bake at 230°C/220°C Fan/Gas Mark 7 for 10 minutes. Reduce oven temperature to 180°C/170°C Fan/Gas Mark 4 and bake 35 to 40 minutes longer or until apples are tender.

The above procedure was repeated using one of the aforementioned premixed sweetener/bulking agent blendsin place of the SPLENDA® No Calorie Sweetener product* used in the control
*SPLENDA® No Calorie Sweetener product, which is commercially available from McNEIL-PPC, Inc., contains a combination of sucralose** with a maltodextrin, water soluble bulking agent.
** The sucralose is commercially available from Tate & Lyle under the tradename, "SPLENDA® Sucralose."

### Comparative Test

Consumer test participants were asked to assess the appearance, liking, and sweetness of the 4 apple pies made with either the control sweetener or one of the 3 sweetener/water insoluble bulking agent/water soluble bulking agent combinations, using a 1 - 5 rating scale. A score of a "1" meant that the pie was poor in a particular attribute, while a score of a "5" meant that the pie was comparatively superb. The results are set forth below in Table E:

**Table E: Comparative Appearance, Liking, and Sweetness Results (expressed as mean scores)**

| *Example Number* | *Appearance* | *Liking* | *Sweetness* |
|---|---|---|---|
| Control | 3.25 | 2.75 | 2.75 |
| (Inulin 40%) | 3.25 | 3.25 | 3.00 |
| (sucrose 40%) | 3.00 | 3.25 | 3.50 |
| (maltodextrin 40%) | 2.50 | 2.00 | 1.75 |

This example showed that when SPLENDA® No Calorie Sweetener product was replaced with a resistant starch water insoluble bulking agent/sucralose/ water soluble bulking agent blend in baked goods, those baked goods that contained either sucrose or inulin as the water soluble bulking agent rated more highly for the measured attributes than those that contained maltodextrin in the blend. Those baked goods that contained either sucrose or inulin as the water soluble bulking agent also rated slightly better than the control baked good with respect to sweetness and overall liking.

This Example also showed that for baked goods, the combination of insoluble bulking agent, water soluble bulking agent, and sucralose performed as well as or slightly better than the control sweetener, which used only water soluble bulking agents.

## Claims

1. A solid, low calorie, palatable sugar substitute composition comprising:
a) a water insoluble bulking agent; and
b) a high intensity sweetener,
wherein the weight ratio of high intensity sweetener to water insoluble bulking agent is 4:1 to 1:6000.

2. The solid, low calorie, palatable sugar substitute composition of claim 1, wherein the weight ratio of high intensity sweetener to water insoluble bulking agent is 1:1 to 1:600.

3. The solid, low calorie, palatable sugar substitute composition of claim 1 or claim 2, wherein the high intensity sweetener is selected from sucralose, aspartame, saccharin, cyclamate, neotame, alitame, acesulfame potassium; brazien; stevia extract; and their salts and derivatives thereof; and mixtures thereof.

4. The solid, low calorie, palatable sugar substitute composition of claim 3 wherein the high intensity sweetener is sucralose.

5. The solid, low calorie, palatable sugar substitute composition of claim 1 wherein the water insoluble bulking agent is selected from celluloses; water insoluble fractions of starches, resistant starches, and modified versions thereof; diatomaceous earth; lignins; water insoluble hemicelluloses; water insoluble portions of amylose; water insoluble portions of amylose pectin; water insoluble fiber from nuts, oats, wheat, rice, barley, corn, or bamboo; fibers from fruits; water insoluble fiber from peas, dried beans, and beets; and derivatives and mixtures thereof.

6. A solid, low calorie, palatable sugar substitute composition according to any of claims 1 to 5, wherein:
component a) additionally comprises a water soluble bulking agent.

7. The solid, low calorie, palatable sugar substitute composition of claim 6, wherein component a) comprises, based upon a total weight of water insoluble bulking agent and water soluble bulking agent, greater than 10 percent of the water insoluble bulking agent.

8. The solid, low calorie, palatable sugar substitute composition of claim 6, wherein component a) comprises, based upon the total weight of water insoluble bulking agent and water soluble bulking agent, greater than 60 percent of the water insoluble bulking agent.

9. The solid, low calorie, palatable sugar substitute composition of any of claims 6 to 8, wherein the water soluble bulking agent selected from inulin, sucrose, or mixtures thereof.

10. A solid, low calorie, palatable sugar substitute composition according to claim 6,
wherein said water insoluble bulking agent is selected from celluloses; water insoluble fractions of starches, resistant starches, and modified versions thereof; water insoluble portions of amylose; water insoluble portions of amylose pectin; and derivatives and mixtures thereof, and said water soluble bulking agent is selected from maltodextrin, maltodextrin, polyols, polydextrose, oligosaccharides, and mixtures thereof; and
component a) comprises, based upon the total weight of water insoluble bulking agent and water soluble bulking agent, greater than 25 percent of the water insoluble bulking agent.
